# FASCICULE DE BREVET EUROPEEN

(11) **EP 3 467 191 B1**
(45) Date de publication et mention de la délivrance du brevet: **01.07.2020**
(21) Numéro de dépôt: 18198089.7
(22) Date de dépôt: 02.10.2018
(51) Int. Cl.: D06F 75/12, F22B 1/28, F22B 37/54

(54) **APPAREIL ELECTROMENAGER COMPRENANT UNE BASE COMPORTANT UNE CHAMBRE D'EBULLITION ALIMENTEE PAR GRAVITE**
ELEKTROHAUSHALTSGERÄT, DAS EINE BASIS MIT EINER KOCHKAMMER MIT SCHWERKRAFTEINSPEISUNG UMFASST
HOUSEHOLD APPLIANCE COMPRISING A BASE HAVING A BOILING CHAMBER POWERED BY GRAVITY

(30) Priorité: 05.10.2017 FR 1759366
(43) Date de publication de la demande: 10.04.2019
(73) Titulaire: SEB S.A., 69130 Ecully (FR)
(72) Inventeur: JAVIT, Maxime, 21000 Dijon (FR); GELUS, Dominique, 69210 Ecully (FR)
(74) Mandataire: Bourrières, Patrice

(56) Documents cités:
- EP-A1- 3 064 640
- EP-A1- 3 088 599
- WO-A1-2009/125263
- CN-U- 201 713 711

## Description

La présente invention se rapporte à un appareil électroménager comprenant une base pour la production de vapeur comportant un générateur de vapeur comprenant une chambre d'ébullition et un réservoir de liquide comportant un orifice de sortie par lequel le liquide s'écoule par gravité vers la chambre d'ébullition, et se rapporte plus particulièrement à un appareil dans lequel la chambre d'ébullition comprend une sortie de vapeur par laquelle la vapeur peut s'échapper en direction d'un outil de travail, tel une brosse de défroissage, et un orifice de communication de liquide relié à une canalisation présentant un orifice d'évacuation fermé par un bouchon amovible accessible depuis l'extérieur de la base.

Il est connu, du modèle d'utilité CN201713711U, un appareil électroménager comprenant une base comportant une chambre d'ébullition et un réservoir d'eau comportant un orifice de sortie par lequel l'eau s'écoule par gravité vers la chambre d'ébullition. Dans ce type d'appareil, l'eau s'écoule en dehors du réservoir lorsque le niveau de liquide dans la chambre d'ébullition est inférieur à un niveau de référence pour lequel le niveau de liquide dans l'appareil empêche l'air de pénétrer dans le réservoir.

Un tel appareil présente l'inconvénient d'être sujet à un colmatage progressif du conduit d'alimentation reliant le réservoir à la chambre d'ébullition par des dépôts de tartre, ces particules de tartre remontant dans le conduit d'alimentation en direction du réservoir lors des mouvements de va et vient de liquide dans le conduit d'alimentation. En effet, dans ce type d'appareil où le réservoir se vide jusqu'à l'obtention d'un niveau d'équilibre pour lequel l'air ne peut plus pénétrer dans le réservoir, chaque appel d'eau de la chambre d'ébullition provoque une chute d'eau du réservoir qui est suivi d'un mouvement de va et vient dans le conduit d'alimentation. Le colmatage progressif du conduit d'alimentation provoque à terme le dysfonctionnement de l'appareil.

Pour remédier à cet inconvénient, le modèle d'utilité CN201713711U propose de munir le conduit d'alimentation d'un embranchement latéral relié à un conduit d'évacuation fermé par un bouchon amovible accessible depuis l'extérieur de la base, le retrait du bouchon permettant d'évacuer l'eau et une partie du tarte contenu dans l'appareil.

Toutefois, un tel conduit d'évacuation ne permet pas de garantir une parfaite évacuation des particules de tartre, ces dernières pouvant s'agglomérer dans différentes zones du conduit d'alimentation et ne pas s'évacuer par une simple vidange par le conduit d'évacuation.

Aussi, un but de la présente invention est de proposer un appareil dont la durée de vie est améliorée en limitant notamment le colmatage du conduit d'alimentation de la chambre d'ébullition. Un autre but de l'invention est de proposer un appareil particulièrement compact.

A cet effet, l'invention a pour objet un appareil électroménager comprenant une base pour la production de vapeur comportant un générateur de vapeur comprenant une chambre d'ébullition et un réservoir de liquide alimentant par gravité la chambre d'ébullition, le liquide s'écoulant par gravité du réservoir vers la chambre d'ébullition jusqu'à ce que le niveau de liquide dans la chambre d'ébullition atteigne un niveau d'équilibre, dit niveau de référence, pour lequel le niveau de liquide dans l'appareil empêche l'air de pénétrer dans le réservoir, la chambre d'ébullition comprenant une sortie de vapeur par laquelle la vapeur peut s'échapper en direction d'un outil de travail, tel une brosse de défroissage, et un orifice de communication relié à une canalisation présentant un orifice d'évacuation fermé par un bouchon amovible, caractérisé en ce que la canalisation est alimentée en liquide en provenance du réservoir par un conduit d'alimentation qui débouche dans la canalisation au niveau d'un orifice d'entrée disposé au-dessus d'une cavité de rétention des particules ménagée dans la partie inférieure de la canalisation.

Un tel appareil présente l'avantage de comporter une cavité de rétention des particules disposée en dessous de l'orifice d'entrée qui recueille et piège les particules de tartre qui tombent par gravité dans le fond la canalisation et sont brassées par le flux de liquide s'établissant entre la chambre d'ébullition et le réservoir lors du fonctionnement de l'appareil.

En effet, la cavité de rétention présente une forme adaptée pour retenir les particules de tartre et éviter qu'elles ne retournent vers la chambre d'ébullition en étant entrainées par le flux de liquide s'écoulant depuis l'orifice d'entrée en direction de l'orifice de communication.

Selon une autre caractéristique de l'invention, la cavité comporte une extrémité longitudinale délimitée par une paroi transversale faisant saillie dans le fond de la canalisation.

Une telle paroi transversale présente l'avantage de former un obstacle qui s'oppose à l'écoulement des particules de la cavité vers la chambre d'ébullition.

Selon une autre caractéristique de l'invention, l'orifice d'évacuation offre un accès direct à la cavité, le bouchon délimitant avantageusement une extrémité longitudinale de la cavité.

Une telle caractéristique permet d'évacuer très facilement les particules piégées dans la cavité de rétention des particules en ouvrant le bouchon.

Selon une autre caractéristique de l'invention, la canalisation présente, en vue de côté, une forme en escalier ou en Z.

Selon une autre caractéristique de l'invention, la canalisation comprend un premier tronçon connecté fluidiquement à l'orifice de communication et un deuxième tronçon qui est décalé axialement vers le bas par rapport au premier tronçon, le deuxième tronçon comportant la cavité de rétention des particules.

Selon une autre caractéristique de l'invention, les premier et deuxième tronçons communiquent entre eux par une ouverture ménagée dans la paroi transversale délimitant l'extrémité longitudinale de la cavité.

Selon une autre caractéristique de l'invention, les premier et deuxième tronçons communiquent entre eux par une ouverture ménagée dans une paroi au niveau de laquelle les premier et deuxième tronçons sont superposés. Selon une autre caractéristique de l'invention, le premier tronçon s'étend dans l'axe de l'orifice de communication.

Selon encore une autre caractéristique de l'invention, l'orifice d'entrée est disposé au voisinage de l'orifice de communication, de préférence à moins de 7 cm de ce dernier.

Une telle caractéristique présente l'avantage de permettre l'obtention d'un ensemble compact.

Selon une autre caractéristique de l'invention, l'orifice d'évacuation offre un accès visuel à l'orifice d'entrée.

Une telle caractéristique permet de faire un contrôle visuel de l'état d'obturation de l'orifice d'entrée et le cas échéant d'effectuer une opération de nettoyage de cet orifice à l'aide d'un outil introduit au travers de l'orifice d'évacuation.

Selon encore une autre caractéristique de l'invention, la chambre d'ébullition est ménagée dans une cuve de contour circulaire, la canalisation s'étendant selon une direction radiale à la cuve.

Selon une autre caractéristique de l'invention, la cavité de rétention des particules reçoit un récipient collecteur de tartre amovible.

Une telle caractéristique permet de contenir les particules de tartre dans un récipient amovible de sorte que l'utilisateur peut évaluer plus facilement la quantité de tartre recueillie. Il peut ainsi adapter la fréquence de nettoyage du récipient collecteur de tartre en fonction de la quantité de tartre qu'il recueille. De plus, un tel collecteur de tartre présente l'avantage de procurer une plus grande ergonomie d'utilisation.

Selon une autre caractéristique de l'invention, un dispositif de filtration est disposé en regard de l'orifice d'entrée.

Un tel dispositif de filtration permet d'éviter que des particules de tartre issues de la chambre d'ébullition ne soit envoyées au travers du conduit d'alimentation, évitant ainsi l'obturation progressive de ce dernier.

De manière préférentielle, le dispositif de filtration sera disposé en amont de l'orifice d'entrée dans le sens d'écoulement du flux de la chambre d'ébullition vers le conduit d'alimentation.

Selon une autre caractéristique de l'invention, le dispositif de filtration est disposé au-dessus de la cavité de rétention des particules.

Une telle caractéristique permet de recueillir dans la cavité les particules de tartre qui se détachent du dispositif de filtration lorsque le flux de liquide s'écoule du réservoir vers la chambre d'ébullition.

Selon une autre caractéristique de l'invention, le dispositif de filtration est une grille de filtration avec des ouvertures calibrées.

Selon encore une autre caractéristique de l'invention, le dispositif de filtration est porté par le récipient collecteur de tartre.

Selon une autre caractéristique de l'invention, le dispositif de filtration est porté par la canalisation.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue en perspective d'un appareil de repassage selon un mode particulier de réalisation de l'invention ;
- la figure 2 est une vue en perspective de la base de l'appareil de la figure 1, démunie de la partie supérieure du boîtier ;
- La figure 3 est une vue en perspective de la canalisation ;
- la figure 4 est une vue en coupe longitudinale de la cuve et de la canalisation selon la ligne IV-IV de la figure 2 ;
- la figure 5 est une vue de coté de la cuve et de la canalisation avec le bouchon amovible retiré de l'orifice d'évacuation ;
- La figure 6 est une autre vue en perspective de l'appareil illustré sur la figure 2 avec le bouchon amovible extrait de l'orifice d'évacuation ;
- La figure 7 est une vue en perspective du bouchon amovible équipé du récipient collecteur de tartre ;
- La figure 8 est une vue en perspective d'une cuve équipée d'une canalisation et d'un bouchon amovible selon un second mode de réalisation de l'invention ; le bouchon étant représenté en position désaccouplé de l'orifice d'évacuation ;
- La figure 9 est une vue en coupe longitudinale de la cuve et de la canalisation représentées à la figure 8, avec le bouchon accouplé à l'orifice d'évacuation.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "avant", "arrière" employés pour décrire l'appareil font référence à cet appareil lorsque la base de l'appareil repose à plat sur le sol.

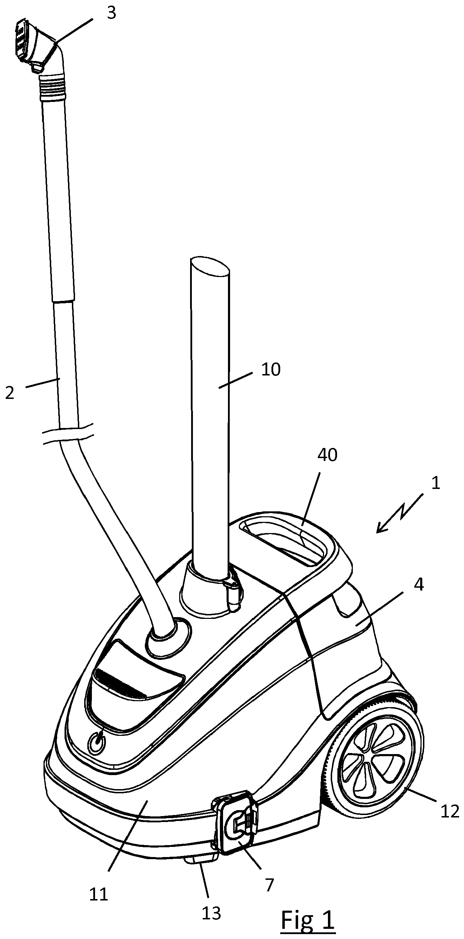

La figure 1 représente un appareil de repassage à la vapeur comportant une base 1 pour la génération de vapeur reliée par un cordon 2 à une brosse de défroissage 3.

Cet appareil est avantageusement muni d'un mât 10 télescopique présentant une extrémité supérieure équipée classiquement d'un porte manteau, non représenté sur la figure 1.

La base 1 comporte un boitier 11 en matière plastique recevant deux roues 12, disposées à l'extrémité arrière de la base 1, qui permettent un déplacement aisé de l'appareil en inclinant la base 1 vers l'arrière de manière à ce que seules les roues 12 restent au contact du sol. La base 1 comporte également deux pieds 13 qui font saillie sur la surface inférieure de la base 1, à proximité de l'extrémité avant de cette dernière, et sur lesquels la partie avant de la base 1 vient prendre appui lorsque la base 1 repose stablement sur le sol avec le mât 10 disposé sensiblement verticalement, comme cela est illustré sur la figure 1.

La base 1 comporte également un réservoir 4 amovible disposé au-dessus de l'axe des deux roues 12, le réservoir 4 comportant une poignée 40 à son extrémité supérieure facilitant son extraction de la base 1.

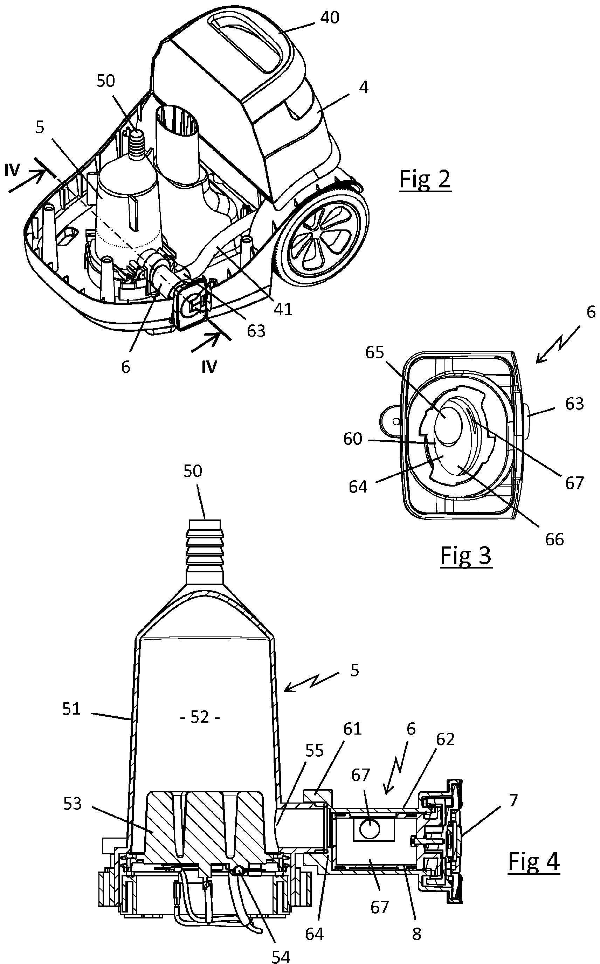

Conformément à la figure 2, la base 1 renferme un générateur de vapeur 5 comportant un orifice de sortie de vapeur 50 à son extrémité supérieure qui est relié au cordon 2 amenant la vapeur à la brosse de défroissage 3.

Le générateur de vapeur 5 est également relié à une canalisation 6 présentant une extrémité munie d'un orifice d'évacuation 60 fermé par un bouchon 7 amovible accessible depuis un côté de la base 1, la canalisation 6 comprenant un embranchement latéral 63 relié à un conduit d'alimentation 41 en provenance du réservoir 4.

Le réservoir 4 est constitué par une enceinte fermée comprenant une paroi de fond muni d'une ouverture fermée par un bouchon amovible, non visibles sur les figures. Le bouchon du réservoir 4 comprend, de manière connue en soi, un orifice de sortie équipé d'une soupape qui se ferme automatiquement lorsque le réservoir 4 est retiré de la base 1, afin d'empêcher l'écoulement d'eau en dehors du réservoir 4, et qui s'ouvre lorsque le réservoir 4 est posé sur la base 1 afin que l'eau du réservoir 4 puisse s'écouler dans le conduit d'alimentation 41. Un tel bouchon équipé d'une soupape est semblable à celui illustré plus en détail dans la demande de brevet WO2007/111691.

Conformément à la figure 4, le générateur de vapeur 5 comporte une cuve 51 sensiblement tronconique qui renferme une chambre d'ébullition 52 dont le fond est défini par un corps 53 en aluminium dans lequel sont intégrées des résistances chauffantes 54, l'alimentation électrique des résistances chauffantes 54 étant contrôlée manière connue en soi par un circuit, non représenté sur les figures.

Comme on peut le voir sur cette figure, la canalisation 6 débouche dans la chambre d'ébullition 52 par un orifice de communication 55 qui est ménagé dans une paroi latérale de la cuve 51, en étant disposé au voisinage du fond de la chambre d'ébullition 52, le diamètre de l'orifice de communication 55 étant avantageusement de l'ordre de 2 cm.

De manière préférentielle, la canalisation 6 comprend un premier tronçon 61, tubulaire, qui s'étend radialement à la cuve 51 et un deuxième tronçon 62, tubulaire, qui est décalé axialement vers le bas par rapport au premier tronçon 61, l'extrémité proximale du deuxième tronçon 62, la plus proche de la cuve 51, étant fermée par une paroi transversale 64 comprenant une ouverture 65, visible sur la figure 3, établissant une communication fluidique entre l'intérieur du premier tronçon 61 de la canalisation 6 et l'intérieur du deuxième tronçon 62 de la canalisation 6.

L'ouverture 65 est ménagée dans la partie supérieure de la paroi transversale 64 et la partie inférieure du deuxième tronçon 62 forme une cavité 66 de rétention des particules dont l'extrémité distale, la plus éloignée de la cuve 51, est fermée par le bouchon 7. De manière préférentielle, le bord inférieur de l'ouverture 65 vient dans l'alignement du bord inférieur de la section de passage du premier tronçon 61 de manière à ce que les particules présentes dans le fond du premier tronçon 61 puissent s'écouler librement vers le deuxième tronçon 62.

Dans l'exemple de réalisation illustré sur les figures, le premier tronçon 61 présente une section de passage circulaire de diamètre de l'ordre de 2 cm et le deuxième tronçon 62 présente avantageusement une section de passage oblongue de hauteur de l'ordre de 3 cm et de largeur de l'ordre de 2 cm. L'ouverture 65 ménagée dans la paroi transversale 64 présente avantageusement une forme oblongue en s'étendant sur une hauteur de l'ordre de 1,5 cm et une largeur de l'ordre de 1 cm.

De manière préférentielle, le conduit d'alimentation 41 en provenance du réservoir 4 est raccordé à la canalisation 6 par un orifice d'entrée 67 qui est ménagé dans la moitié supérieure du deuxième tronçon 62, c'est-à-dire à hauteur de l'ouverture 65 de communication ménagée dans la paroi transversale 64. Ainsi, lorsque du liquide s'écoule du réservoir 4 vers la cuve 51, le courant généré par le flux de liquide est localisé essentiellement dans la moitié supérieure du deuxième tronçon 62, le liquide présent dans la moitié inférieure du deuxième tronçon 62, au niveau de la cavité 66 de rétention, restant alors sensiblement stationnaire.

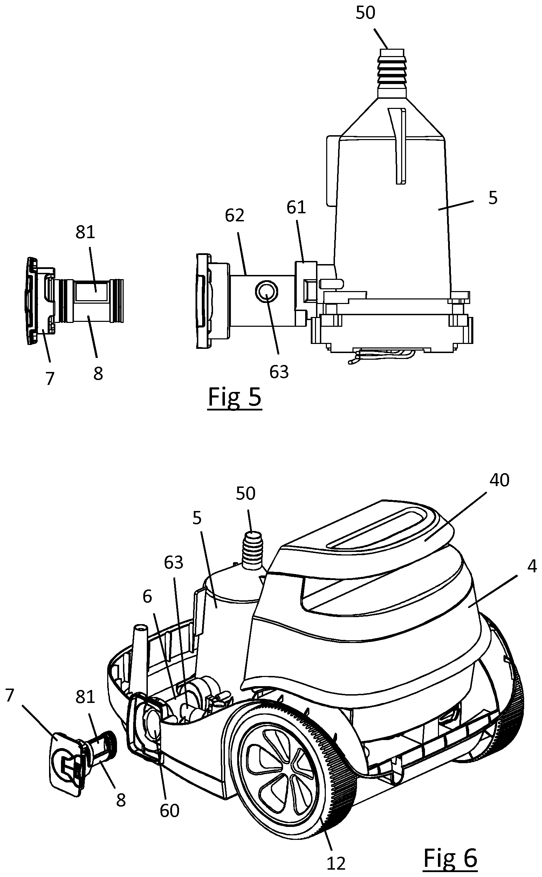

Conformément aux figures 5 à 7, le deuxième tronçon 62 de la canalisation 6 reçoit avantageusement un récipient 8 collecteur de tartre qui est préférentiellement attaché au bouchon 7 amovible.

Le bouchon 7 amovible est fixé sur l'extrémité de la canalisation 6 par une liaison de type baïonnette bien connue de l'homme du métier et qui est par exemple similaire à celle décrite plus en détails dans la demande de brevet FR 2981371 déposée par la demanderesse.

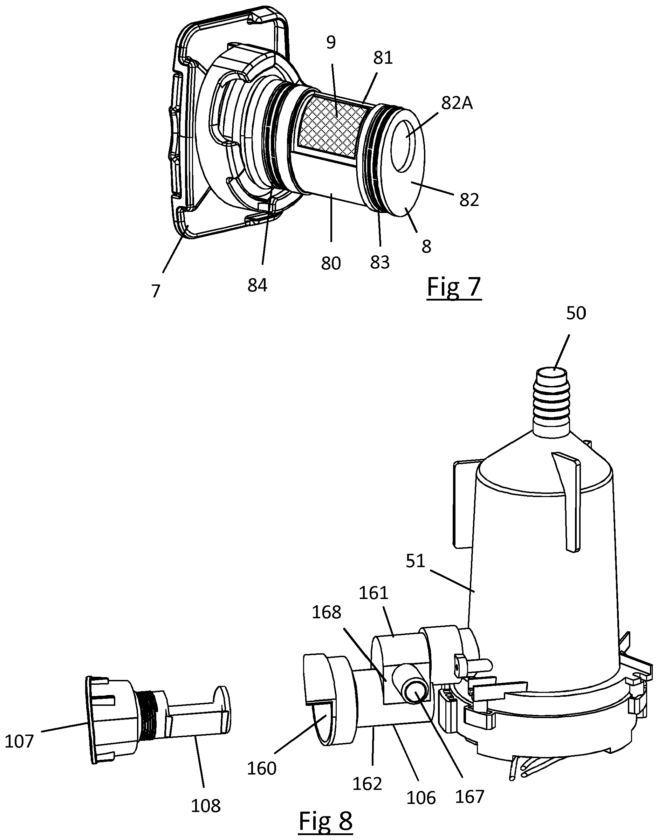

Dans l'exemple de réalisation illustré sur la figure 7, le récipient 8 collecteur de tartre présente un corps 80 tubulaire de section oblongue qui présente une forme complémentaire de celle du deuxième tronçon 62, le corps 80 comprenant une fenêtre 81 venant en regard de l'orifice d'entrée 67 et une extrémité longitudinale fermée par une paroi d'extrémité 82 munie d'une ouverture 82A oblongue venant en correspondance avec l'ouverture 65 de la paroi transversale 64, la taille et la forme de l'ouverture 82A de la paroi d'extrémité étant semblables à celle de l'ouverture 65 de la paroi transversale 64.

De manière préférentielle, la fenêtre 81 est équipée d'une grille de filtration 9, représentée uniquement sur la figure 7, qui filtre l'eau s'écoulant au travers de la fenêtre 81 et empêche notamment que des particules de tartre, issues de la cuve 51 et transportées par les courants s'établissant entre la cuve 51 et le réservoir 4, ne viennent s'accumuler au niveau de l'orifice d'entrée 67 de la canalisation 6.

A titre d'exemple, la grille de filtration 9 est réalisée en fil d'inox et présente des ouvertures carrées de moins de 0,4 mm de côté, et préférentiellement comprises entre 0,1 mm et 0,4 mm.

De manière avantageuse, le récipient 8 collecteur de tartre comporte un premier et un deuxième joints d'étanchéité 83, 84 disposés de part et d'autre de la fenêtre 81, les joints 83, 84 s'étendant sur le pourtour du corps du récipient 8 pour venir au contact de la paroi intérieure du deuxième tronçon 62 de la canalisation 6.

Le premier joint d'étanchéité 83 est disposé à proximité de la paroi d'extrémité 82 du récipient 8 et permet d'éviter la circulation d'eau à l'extérieur du récipient 8 collecteur de tartre.

Le deuxième joint d'étanchéité 84 est disposé à proximité du bouchon 7 amovible et permet d'éviter que de l'eau ne s'écoule à l'extérieur de l'appareil par le bouchon 7 amovible lorsque ce dernier vient fermer la canalisation 6.

Le récipient 8 collecteur de tartre peut également être avantageusement muni d'un joint d'étanchéité disposé sur tout le pourtour de la fenêtre 81 pour assurer une liaison étanche avec le pourtour de l'orifice d'entrée 67 et éviter que de l'eau ne s'écoule dans l'interstice entre la canalisation 6 et le récipient 8 collecteur de tartre.

Le fonctionnement de l'appareil va maintenant être décrit.

Lorsque l'utilisateur souhaite utiliser l'appareil, il ôte le bouchon du réservoir 4 puis remplit ce dernier en position retourné, la poignée 40 du réservoir 4 se trouvant alors orientée vers le bas. Lorsque le niveau maximum de remplissage est atteint, l'utilisateur referme le bouchon puis saisit le réservoir 4 par la poignée 40 de manière à l'amener sur la base 1 ainsi que cela est illustré sur la figure 1. Lors de la mise place du réservoir 4 sur la base 1, la soupape intégrée au bouchon s'ouvre alors automatiquement et l'eau du réservoir 4 s'écoule dans le conduit d'alimentation 41, puis dans la canalisation 6 et dans la cuve 51 jusqu'à ce que le niveau d'eau dans l'appareil, et notamment dans la cuve 51, atteigne un niveau de référence, illustré en pointillé sur la figure 2, pour lequel l'air ne peut plus pénétrer dans le réservoir 4.

Ce niveau de référence, également appelé niveau d'équilibre, correspond au niveau d'eau pour lequel l'eau atteint l'orifice de sortie du réservoir 4 et empêche l'air de pénétrer dans le réservoir 4 de sorte que l'eau ne peut plus s'écouler en dehors du réservoir 4 tant que le niveau d'eau dans l'appareil ne baisse pas.

L'appareil peut alors être mis en fonctionnement de manière à alimenter électriquement les résistances chauffantes 54 présentes dans le fond de la chambre d'ébullition 52. L'eau présente dans la chambre d'ébullition 52 est alors amenée à ébullition et la vapeur produite peut s'échapper par le cordon 2 en direction de la brosse de défroissage 3. L'évaporation de l'eau présente dans la chambre d'ébullition 52 provoque alors une diminution du niveau dans la cuve 51 et donc un abaissement du niveau d'eau dans l'appareil et notamment au niveau de l'orifice de sortie du réservoir 4 de sorte que l'air peut de nouveau pénétrer dans le réservoir 4 en permettant à l'eau du réservoir 4 de s'écouler en direction de la cuve 51 jusqu'à atteindre de nouveau le niveau d'équilibre. Cet écoulement de l'eau du réservoir 4 vers la chambre d'ébullition 52 s'effectue de manière saccadée en générant des allers-retours du flux d'eau entre la cuve 51 et le réservoir 4 du fait des vagues générées par l'écoulement momentané d'une quantité d'eau hors du réservoir 4.

Ces mouvements d'eau alternatifs dans la canalisation 6 et dans la cuve 51 provoquent alors un soulèvement des particules de tartre et leur transport le long de la canalisation 6. Lorsque les particules de tartre atteignent le deuxième tronçon 62 de la canalisation 6, ces dernières ont tendances à tomber sous l'effet de la gravité, dans le fond du deuxième tronçon 62, c'est-à-dire dans la cavité 66 de rétention des particules et en particulier dans le récipient 8 collecteur de tartre disposé dans la cavité 66.

Lorsque l'eau dans la canalisation 6 se déplace de la cuve 51 vers le réservoir 4, les éventuelles particules de tartre qui sont entrainées en direction de l'orifice d'entrée 67 sont bloquées par la grille de filtration 9 puis se trouvent détachées de cette grille de filtration 9 lors du reflux de l'eau en direction de la cuve 51, les particules tombant alors par gravité dans la cavité 66 et donc dans le récipient 8 collecteur de tartre.

Un tel appareil permet présente donc l'avantage de posséder une cavité 66 de rétention des particules qui récolte efficacement les particules de tartre initialement formées dans la chambre d'ébullition 52 et transportées dans la canalisation 6 par les flux d'eaux alternatifs s'établissant entre le réservoir 4 et la cuve 51 tout au long du fonctionnement de l'appareil.

Ainsi, lorsque l'utilisateur souhaite faire une opération d'entretien de son appareil, par exemple en y étant invité par une alarme activée automatiquement sur l'appareil, il lui suffit d'amener l'appareil au bord d'un évier puis d'ouvrir le bouchon 7 de manière à ce que l'eau encore contenue dans la cuve 51 puisse s'écouler par la canalisation 6. En retirant le bouchon 7 il extrait par la même occasion le récipient 8 collecteur de tartre, et peut visualiser la quantité de tartre récolté. Il peut alors rincer le récipient 8 collecteur de tartre en faisant passer l'eau du robinet au travers de la fenêtre 81 et en évacuant le contenu du récipient 8 par l'ouverture 82A de la paroi d'extrémité 82.

L'utilisateur peut également vérifier visuellement par l'orifice d'évacuation 60 situé à l'extrémité de la canalisation 6, qu'aucun dépôt ne vient obstruer l'orifice d'entrée 67 et si nécessaire nettoyer mécaniquement cet orifice d'entrée 67 en introduisant un goupillon dans la canalisation 6 par l'orifice d'évacuation 60.

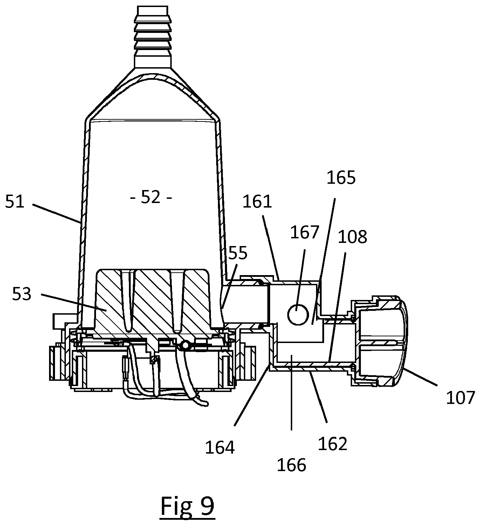

Les figures 8 et 9 illustrent un deuxième mode de réalisation de la canalisation pouvant équiper la cuve de l'appareil selon l'invention. Conformément à ces figures, l'appareil selon ce deuxième mode de réalisation se différencie de l'appareil selon le premier mode de réalisation uniquement par la forme de la canalisation et de l'ensemble bouchon amovible/récipient collecteur de tartre.

Dans ce deuxième mode de réalisation, l'orifice de communication 55 de la cuve 51 est relié à une canalisation 106 présentant une forme en escalier, la canalisation 106 comportant un premier tronçon 161 tubulaire qui s'étend radialement à la cuve 51 et un deuxième tronçon 162 tubulaire qui est décalé axialement vers le bas par rapport au premier tronçon 161, les deux tronçons comprenant une zone de liaison où les deux tronçons 161, 162 sont superposés l'un par rapport à l'autre.

Les deux tronçons de la canalisation 106 communiquent entre eux par une ouverture 165 reliant la partie inférieure du premier tronçon 161 avec la partie supérieure du deuxième tronçon 162, la zone de liaison étant fermée latéralement par des parois latérales 168 qui s'étendent verticalement de chaque côté de la canalisation 106.

Le conduit d'alimentation 41 en provenance du réservoir 4 est raccordé à la canalisation 106 par un orifice d'entrée 167 qui est ménagé dans la paroi latérale 168 de la zone de liaison de la canalisation 106, avantageusement à hauteur du premier tronçon 161 de manière à ce que l'orifice d'entrée 167 débouche au-dessus de l'ouverture 165 de communication entre les deux tronçons 161, 162.

De manière préférentielle, l'orifice d'entrée 167 est muni d'une grille de filtration, non représentée sur les figures, empêchant la remontée des particules de tartre issues de la chambre d'ébullition 52 en direction du conduit d'alimentation 41.

Conformément à la figure 9, le deuxième tronçon 162 présente une extrémité proximale qui est fermée par une paroi transversale 164 et une extrémité distale présentant un orifice d'évacuation 160 fermé par un bouchon 107 amovible embarquant un récipient 108 collecteur de tartre présentant la forme d'un demi-cylindre ouvert dans sa partie supérieure.

Le fonctionnement de l'appareil équipé de l'ensemble cuve/canalisation selon ce second mode de réalisation reste le même que celui décrit pour le premier mode de réalisation, la construction particulière de la canalisation 106 selon le second mode de réalisation présentant cependant l'avantage de permettre l'obtention d'une cavité 166 de rétention des particules de plus grand volume, grâce à sa plus grande hauteur, tout en conservant un encombrement réduit de la canalisation 106, notamment dans le sens de la largeur de l'appareil. De plus, une telle construction permet d'éloigner l'orifice d'entrée 167 d'eau de la cavité 166 de rétention des particules, ce qui présente l'avantage de constituer une zone de calme plus prononcée au niveau de la cavité 166 de rétention des particules et donc de piéger encore plus efficacement les particules dans la cavité 166 et donc dans le récipient 108 collecteur de tartre.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, l'appareil pourra ne pas comporter de récipient collecteur de tartre dans la canalisation. Dans cette variante de réalisation, l'évacuation des particules de tartre s'effectuera en retirant simplement le bouchon au-dessus d'un évier et en rinçant le contenu de la cavité de rétention des particules en y injectant de l'eau. Une telle opération de rinçage de la cavité de rétention des particules peut, par exemple, être effectuée en remplissant le réservoir d'eau et en le mettant en place sur l'appareil préalablement à l'ouverture du bouchon de manière à ce que l'eau du réservoir s'écoule progressivement, par l'ouverture d'entrée, dans la cavité de rétention des particules, puis par l'orifice d'évacuation en entrainant les particules de tartre.

## Revendications

1. Appareil électroménager comprenant une base (1) pour la production de vapeur comportant un générateur de vapeur (5) comprenant une chambre d'ébullition (52) et un réservoir (4) de liquide alimentant par gravité la chambre d'ébullition (52), le liquide s'écoulant par gravité du réservoir (4) vers la chambre d'ébullition jusqu'à ce que le niveau de liquide dans la chambre d'ébullition (52) atteigne un niveau d'équilibre, dit niveau de référence, pour lequel le niveau de liquide dans l'appareil empêche l'air de pénétrer dans le réservoir (4), la chambre d'ébullition (52) comprenant une sortie de vapeur (50) par laquelle la vapeur peut s'échapper en direction d'un outil de travail (3), tel une brosse de défroissage, et un orifice de communication (55) relié à une canalisation (6 ;106) présentant un orifice d'évacuation (60 ;160) fermé par un bouchon (7 ; 107) amovible, **caractérisé en ce que** la canalisation (6 ; 106) est alimentée en liquide en provenance du réservoir (4) par un conduit d'alimentation (41) qui débouche dans la canalisation (6 ;106) au niveau d'un orifice d'entrée (67, 167) disposé au-dessus d'une cavité (66 ; 166) de rétention des particules ménagée dans la partie inférieure de la canalisation (6 ; 106).

2. Appareil électroménager selon la revendication 1, **caractérisé en ce que** la cavité (66 ; 166) comporte une extrémité longitudinale délimitée par une paroi transversale (64 ; 164) faisant saillie dans le fond de la canalisation (6 ; 106).

3. Appareil électroménager selon l'une quelconque des revendications 1 à 2, **caractérisé en ce que** l'orifice d'évacuation (60 ; 160) offre un accès direct à la cavité (66 ; 166), le bouchon (7) délimitant une extrémité longitudinale de la cavité (66 ;166).

4. Appareil électroménager selon l'une quelconque des revendications 1 à 3, **caractérisé en ce que** la canalisation (6, 106) comprend un premier tronçon (61 ;161) connecté fluidiquement à l'orifice de communication (55) et un deuxième tronçon (62 ; 162) qui est décalé axialement vers le bas par rapport au premier tronçon (61 ; 161), le deuxième tronçon (62 ;162) comportant la cavité (66 ; 166) de rétention des particules.

5. Appareil électroménager selon l'une quelconque des revendications 1 à 4, **caractérisé en ce que** l'orifice d'entrée (67 ; 167) est disposé au voisinage de l'orifice de communication (55), de préférence à moins de 7 cm.

6. Appareil électroménager selon l'une quelconque des revendications 1 à 5, **caractérisé en ce que** l'orifice d'évacuation (60) offre un accès visuel à l'orifice d'entrée (67).

7. Appareil électroménager selon l'une quelconque des revendications 1 à 6, **caractérisé en ce que** la chambre d'ébullition (52) est ménagée dans une cuve (51) de contour circulaire et **en ce que** la canalisation (6 ; 106) s'étend selon une direction radiale à la cuve (51).

8. Appareil électroménager selon l'une quelconque des revendications 1 à 7, **caractérisé en ce que** la cavité (66 ; 166) de rétention des particules reçoit un récipient (8 ; 108) collecteur de tartre amovible.

9. Appareil électroménager selon l'une quelconque des revendications 1 à 8, **caractérisé en ce qu'**un dispositif de filtration (9) est disposé en regard de l'orifice d'entrée (67).

## Patentansprüche

1. Elektrisches Haushaltsgerät, umfassend einer Basis (1) zur Erzeugung von Dampf, die einen Dampferzeuger (5) aufweist, der eine Siedekammer (52) und einen Tank (4) für Flüssigkeit umfasst, die durch Schwerkraft die Siedekammer (52) versorgt, wobei die Flüssigkeit durch die Schwerkraft von dem Tank (4) zu der Siedekammer fließt, bis der Pegel der Flüssigkeit in der Siedekammer (52) einen Gleichgewichtspegel erreicht, der als Referenzpegel bezeichnet wird, für den der Flüssigkeitspegel in der Vorrichtung verhindert, dass Luft in den Tank (4) gelangt, wobei die Siedekammer (52) einen Dampfauslass (50), durch den der Dampf in Richtung des Arbeitswerkzeugs (3), wie eine Glättungsbürste, entweichen kann, und eine Verbindungsöffnung (55) umfasst, die mit einer Rohrleitung (6; 106) verbunden ist, die eine Entleerungsöffnung (60; 160) vorweist, die durch einen abnehmbaren Stopfen (7; 107) verschlossen ist, **dadurch gekennzeichnet, dass** die Rohrleitung (6; 106) mit Flüssigkeit aus dem Tank (4) durch eine Versorgungsleitung (41) versorgt wird, die an einer Einlassöffnung (67, 167), die über einem Partikelrückhaltehohlraum (66; 166) angeordnet ist, der im unteren Teil der Rohrleitung (6; 106) ausgebildet ist, in die Rohrleitung (6; 106) mündet.

2. Elektrisches Haushaltsgerät nach Anspruch 1, **dadurch gekennzeichnet, dass** der Hohlraum (66; 166) ein durch eine Querwand (64; 164) begrenztes Längsende aufweist, das in den Boden der Rohrleitung (6; 106) hineinragt.

3. Elektrisches Haushaltsgerät nach einem der Ansprüche 1 bis 2, **dadurch gekennzeichnet, dass** die Entleerungsöffnung (60; 160) einen direkten Zugang zu dem Hohlraum (66; 166) bietet, wobei der Stopfen (7) ein Längsende des Hohlraums (66; 166) begrenzt.

4. Elektrisches Haushaltsgerät nach einem der Ansprüche 1 bis 3, **dadurch gekennzeichnet, dass** die Rohrleitung (6, 106) einen ersten Abschnitt (61; 161), der mit der Verbindungsöffnung (55) fluidisch verbunden ist, und einen zweiten Abschnitt (62; 162) umfasst, der gegenüber dem ersten Abschnitt (61; 161) axial nach unten versetzt ist, wobei der zweite Abschnitt (62; 162) den Partikelrückhaltehohlraum (66; 166) aufweist.

5. Elektrisches Haushaltsgerät nach einem der Ansprüche 1 bis 4, **dadurch gekennzeichnet, dass** die Einlassöffnung (67; 167) in der Nähe der Verbindungsöffnung (55) angeordnet ist, vorzugsweise innerhalb von 7 cm.

6. Elektrisches Haushaltsgerät nach einem der Ansprüche 1 bis 5, **dadurch gekennzeichnet, dass** die Entleerungsöffnung (60) einen visuellen Zugang zu der Einlassöffnung (67) bietet.

7. Elektrisches Haushaltsgerät nach einem der Ansprüche 1 bis 6, **dadurch gekennzeichnet, dass** die Siedekammer (52) in einem Tank (51) mit kreisförmiger Kontur ausgebildet ist, und dass sich die Rohrleitung (6; 106) entlang einer radialen Richtung zu dem Tank (51) erstreckt.

8. Elektrisches Haushaltsgerät nach einem der Ansprüche 1 bis 7, **dadurch gekennzeichnet, dass** der Partikelrückhaltehohlraum (66; 166) einen herausnehmbaren Kalksammelbehälter (8; 108) aufnimmt.

9. Elektrisches Haushaltsgerät nach einem der Ansprüche 1 bis 8, **dadurch gekennzeichnet, dass** eine Filtrationsvorrichtung (9) gegenüber der Einlassöffnung (67) angeordnet ist.

## Claims

1. Electrical household appliance comprising a base (1) for producing steam, having a steam generator (5) comprising a boiling chamber (52) and a liquid reservoir (4) to supply the boiling chamber (52) by gravity, the liquid flowing by gravity from the reservoir (4) toward the boiling chamber until the liquid level in the boiling chamber (52) reaches an equilibrium level, called the reference level, at which the liquid level in the appliance prevents air from entering the reservoir (4), the boiling chamber (52) comprising a steam outlet (50) through which steam can escape toward a work tool (3), such as a smoothing brush, and a communication opening (55) connected to a pipe (6; 106) having an evacuation opening (60; 160) closed with a removable stopper (7; 107), **characterised in that** the pipe (6; 106) is supplied with liquid from the reservoir (4) via a supply duct (41) that leads to the pipe (6; 106) at the level of an inlet opening (67; 167) provided above a particle-retention cavity (66; 166) arranged in the lower part of the pipe (6; 106).

2. Electrical household appliance according to claim 1, **characterised in that** the cavity (66; 166) has a longitudinal extremity defined by a transverse wall (64; 164) projecting into the bottom of the pipe (6; 106).

3. Electrical household appliance according to claims 1 to 2, **characterised in that** the evacuation opening (60; 160) offers direct access to the cavity (66; 166), the stopper (7) defining a longitudinal extremity of the cavity (66; 166).

4. Electrical household appliance according to claims 1 to 3, **characterised in that** the pipe (6; 106) comprises a first segment (61; 161) fluidically connected to the communication opening (55) and a second segment (62; 162) which is axially offset downward relative to the first segment (61; 161), the second segment (62; 162) containing the particle-retention cavity (66; 166).

5. Electrical household appliance according to claims 1 to 4, **characterised in that** the inlet opening (67; 167) is provided in the vicinity of the communication opening (55), that preferably being less than 7 cm.

6. Electrical household appliance according to claims 1 to 5, **characterised in that** the evacuation opening (60) offers visual access to the inlet opening (67).

7. Electrical household appliance according to claims 1 to 6, **characterised in that** the boiling chamber (52) is arranged in a tank (51) having a circular contour and **in that** the pipe (6; 106) extends along a radial direction to the tank (51).

8. Electrical household appliance according to claims 1 to 7, **characterised in that** the particle-retention cavity (66; 166) receives a removable scale-collecting container (8; 108).

9. Electrical household appliance according to claims 1 to 8, **characterised in that** a filtration device (9) is provided facing the inlet opening (67).
